# NEW EUROPEAN PATENT SPECIFICATION

(11) **EP 0 129 444 B2**
(45) Date of publication and mention of the opposition decision: **19.04.1995**
(45) Mention of the grant of the patent: 28.11.1990
(21) Application number: 84304148.4
(22) Date of filing: 19.06.1984
(51) Int. Cl.: B01D 53/04, C01B 31/18, C10K 1/32

(54) **Methods for obtaining high-purity carbon monoxide**
Verfahren zur Herstellung von hochreinem Kohlenmonoxid
Procédé pour l'obtention d'oxyde de carbone à haute pureté

(30) Priority: 20.06.1983 JP 110616/83; 06.10.1983 JP 187479/83; 07.10.1983 JP 188117/83
(43) Date of publication of application: 27.12.1984
(73) Proprietor: KAWASAKI STEEL CORPORATION, Chuo-Ku, Kobe-Shi Hyogo-Ken (JP); Osaka Sanso Kogyo Limited, Yodogawa-ku Osaka (JP)
(72) Inventor: Sakuraya, Toshikazu c/o Technical Laboratories of, Chiba-shi Chiba-ken (JP); Fujii, Tetsuya c/o Technical Laboratories of, Chiba-shi Chiba-ken (JP); Matsui, Shigeo c/o Chuo Laboratories of, Moriyama-shi Shiga-ken (JP); Hayashi, Shigeki c/o Chuo Laboratories of, Moriyama-shi Shiga-ken (JP)
(74) Representative: Ritter, Stephen David

(56) References cited:
- EP-A- 0 008 512
- EP-A- 0 103 070
- FR-A- 2 531 097
- US-A- 3 430 418
- US-A- 3 619 984

## Description

The present invention relates to a method for obtaining high-purity carbon monoxide from a feed gas, such as off-gases from converters furnace or blast furnaces, containing carbon dioxide and nitrogen in addition to carbon monoxide by a modification of the pressure swing adsorption (PSA) technique.

Off-gases from refining vessels used in iron mills contain fairly large amounts of carbon monoxide. The chemical composition of off-gases from a converter and a blast furnace are listed below.

| | CO | CO₂ | N₂ | H₂ |
|---|---|---|---|---|
| Off-gas from converter furnace | 60-87% | 3-20% | 3-20% | 1-10% |
| Off-gas from blast furnace | 20-30% | 20-30% | 40-60% | 1-10% |

High-purity CO recovered from these off-gases at low cost could be used as a raw material for synthesis of chemicals or as a gas to be blown into molten metal in refining vessels. Most reactions for the synthesis of chemicals require high temperatures and pressures, and therefore, the CO used should have the lowest possible content of CO₂ that corrodes the reactor by oxidation. In order to ensure a high reaction efficiency, N₂ that usually does not take part in the reaction should be removed as much as possible. While various gases are blown into a refining vessel for the purpose of increasing the efficiency of metal refining; argon that is expensive is typically used in order to avoid the increase in the concentrations of impure gases (e.g. H₂ and N₂) in the molten metal. Since off-gases are produced in large quantities from converters and blast furnaces in an iron mill, high-purity CO recovered from these gases at low cost could be used as an almost equally effective alternative to argon. In this case, the nitrogen content of the high-purity CO should be as low as possible for the purpose of preventing the increase in the N₂ content of molten iron. Furthermore, the CO₂ concentration should desirably be low in order to prevent oxidative attack of the carbon-base refractory lining of refining vessel.

It has been proposed to recover high-purity CO from off-gases from iron mills either by deep-freezing separation or by solution absorption techniques such as the copper solution method and cosorb method. However, the deep-freezing separation technique requires low temperature and high pressure, whereas the solution absorption technique requires high temperature and pressure. Furthermore, both techniques need complicated and expensive equipment. Another disadvantage with the deep-freezing technique is that the boiling points of N₂ and CO are so close to each other that their complete separation is very difficult.

Therefore, the present inventors looked to adsorption techniques for recovering high-purity CO by a simpler and less expensive process. The objective of the inventors was to recover high-purity CO not only from off-gases from refining furnaces but also from off-gases from petroleum refineries and chemical synthesis plants, as well as from off-gases resulting from the partial oxidation or hydroreforming of natural gas and heavy hydrocarbon oils.

Separation of gases by pressure-swing adsorption is known, and methods for recovery of less strongly adsorbable gases (those components which are not easily adsorbed on an adsorbent) are shown in Japanese Patent Publication Nos. 23928/63 and 15045/63. However, as far as the inventors know, nobody has succeeded in recovery of high-purity CO from off-gases containing not only nitrogen but also carbon dioxide which has a high tendency to be absorbed together with carbon monoxide.

U.S. Serial No. 517,272 by Matsui et al filed on July 26, 1983 (US-A-4.468.238) which was assigned to the assignee of this invention discloses removal of nitrogen from mixture comprising nitrogen and carbon monoxide or nitrogen, carbon monoxide and carbon dioxide. However, Matsui et al does not disclose separation of carbon dioxide from said mixture.

EP-A-0 008 512 discloses a pressure swing adsorption process for recovering hydrogen and carbon dioxide from a mixture of H₂, CO₂ and CO. When present, N₂ contained in said mixture is recovered as part of a so-called "secondary component" in admixture with CO.

An object of this invention is to provide a process for separating CO from a mixture comprising at least CO₂, CO and N₂ through PSA process.

Another object of this invention is to provide a process for separating CO from a mixture comprising at least CO₂, CO and N₂ in which Matsui *et al* process is improved.

Still another object of this invention is to provide a process for separating CO from a mixture comprising at least CO₂, CO and N₂ in which adsorption step is carried out at a near atmospheric pressure for saving energy for pressurizing adsorption columns.

According to the invention there is provided a process for separating carbon monoxide from a feed gas comprising CO₂, CO and N₂ by PSA in a two stage adsorption operation which comprises a first adsorption stage for removing CO₂ from said feed gas and a second adsorption stage for separating CO from gaseous mixture withdrawn as first stage product gas from the first adsorption stage:
(1) the first adsorption stage comprising pressure swing adsorption with repeated adsorption and desorption using at least two adsorption columns containing an adsorbent exhibiting selective adsorption properties for carbon dioxide to remove carbon dioxide from said feed gas, and
(2) the second adsorption stage comprising a process for separating carbon monoxide from the gaseous mixture, which has been withdrawn from the first adsorption stage, through PSA using at least two adsorption columns containing an adsorbent exhibiting selective adsorption properties for carbon monoxide, characterised in that the second adsorption stage comprises:
   (i) pressurizing an adsorption column by gaseous mixture which has been withdrawn from the first adsorption stage;
   (ii) continuing the introduction of the gas mixture referred to in step (i) into the adsorption column pressurised in step (i) so as to adsorb carbon monoxide on or in the adsorbent until the concentration of the CO in the gas leaving the adsorption column becomes equal to the concentration of the CO in the gas entering the adsorption column or until just before the time when the two concentrations become equal;
   (iii) connecting the adsorption column in which step (ii) has been completed to another adsorption column in which step (v) was previously completed, to reduce the pressure in the former adsorption column to atmospheric pressure;
   (iv) purging N₂ by cocurrently introducing product gas into the first-mentioned adsorption column of step (iii), and in which step (iii) has been completed
   (v) evacuating the adsorption column in which step (iv) has been completed to recover carbon monoxide adsorbed on or in the adsorbent of the adsorption column; and
   (vi) connecting the adsorption column which step (v) has been completed, to an adsorption column, in which step (ii) was previously completed to increase pressure in said adsorption column referred to in step (v),
   (vii) after step (vi) is completed, pressurising the first of the two columns mentioned in step (vi) by gas withdrawn in the purging step of another column,
   periodically switching the flow between or among said adsorption columns so as to repeat the above steps in the columns.

After step (ii) is completed and before step (iii) is started, part of the gaseous mixture remaining in the column may be removed outside all the adsorption columns.

Preferably said first adsorption stage comprises:
(i) pressurizing an adsorption column by the product gas of the first adsorption stage,
(ii) introducing said feed gas into the adsorption column, pressurized in step (i), so as to adsorb carbon dioxide as a main component on or in the adsorbent,
(iii) depressurizing the adsorption column in which step (ii) has been completed to near one atmospheric pressure,
(iv) evacuating the column in which step (iii) has been completed, and
(v) purging carbon dioxide by introducing waste gas obtained in the adsorbing step of the second stage, into the column in which step (iv) was previously completed,
periodically switching the flow between or among said columns so as to repeat the above steps in the columns.

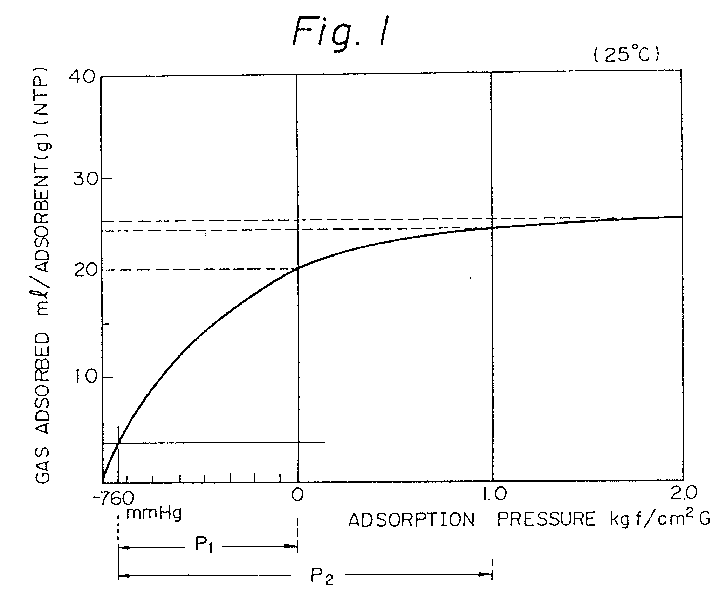

Figure 1 is a graph showing relationship between adsorption pressure and adsorbed CO;

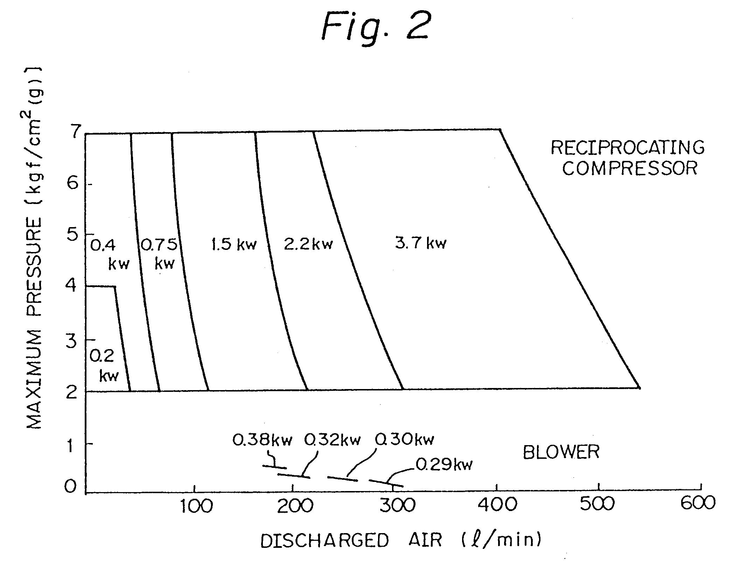

Figure 2 is a graph showing comparison of energy in case of using reciprocating compressor with that in case of using blower; and
Figures 3 and 4 are flowsheets showing preferable apparatuses of this invention.

The adsorbents employed in the practice of the first and second adsorption stages of this invention include natural or synthetic zeolites, molecular sieves, activated carbon and the like. Mordenite type zeolite and adsorbent obtained by grinding mordenite type zeolite, followed by sintering the reformed zeolite with a binding agent are preferable.

In the first adsorption stage, carbon dioxide is removed from a mixture comprising CO, CO₂ and more poorly adsorbable component than CO, such as nitrogen through PSA.

The preferable first adsorption stage comprises in the following:

At least two adsorption columns containing an adsorbent exhibiting selective absorb property to carbon dioxide are used. The process comprises:
(i) a step of pressurizing the adsorption column, in which step (v) was previously completed, to a pressure of 0.2-3.0 kg/cm² · G (120-400 kPa) by introducing the first stage product gas into the column countercurrently;
(ii) a step of introducing the feed gas into the adsorption column, in which step (i) was previously completed, so as to adsorb carbon dioxide on or in the adsorbent;
(iii) a step of depressurizing the adsorption column, in which step (ii) was previously completed, to near atmospheric pressure countercurrently;
(iv) a step of evacuating the adsorption column, in which step (iii) was previously completed by means of vacuum pump blower or ejector, and preferably the column is evaporated to 30-300 (4-40 kPa) Torr; and
(v) a step of purging carbon dioxide by countercurrently passing the waste gas of the second adsorption stage through the adsorption column, in which step (iv) was previously completed;
periodically switching the flow between or among said adsorption columns so as to repeat the above steps in the columns.

Steps of the second adsorption stage are explained in detail in the following:

### Step (i)

In this step, the first stage product gas is introduced into an adsorption column to increase pressure in the columns. Since gas to be recovered according to this invention is easily adsorbable component, too high adsorption pressure is unnecessary. In general, the adsorption pressure of as low as 3 kg/cm² · G (400 kPa) is sufficient. The adsorption pressure of less than 1 kg/cm² · G (200 kPa), for example 0.1 kg/cm² · G (110 kPa) can also be used. However, adsorption pressure of more than 3 kg/cm² · G (400 kPa) may be used.

### Step (ii)

Adsorption step is continued until the concentration of the easily adsorbable component, for example CO, in the gas leaving the adsorption column becomes equal to the concentration of the same component entering the adsorption column, or until just before the time when the two concentrations become equal.

### Step (iii)

When step (ii) is completed, the concentration of the poorly adsorbable component is relatively high around the exit of the column.

So, part of the gaseous mixture remaining in the column may be removed outside all the adsorption columns in order to enhance purity of the product gas. It is preferable that the gaseous mixture remaining in the column may be removed to a pressure of three fourth-one fifth of adsorption pressure. This step is optional.

### Step (iv)

The adsorption column, in which step (iii) was previously completed, is connected to the other adsorption column, in which step (vi) is previously completed to withdraw the gas component from the former column and introduce it into the latter column, thereby reducing the pressure in the former adsorption column to one atmosphere or a pressure close to it. The pressure in the former adsorption column may be reduced to near pressure equalization of the two columns.

### Step (v)

Product gas is passed through the adsorption column, in which step (iv) was previously completed, to purge nitrogen between the adsorbent particles. It is preferable that the pressure in this step is lower than the adsorption pressure and is higher than one atmosphere. In general, it may be unnecessary to use pump; and the step may be carried out by connecting the adsorption column to storage tank for product gas. The product gas is cocurrently passed through the column.

### Step (vi)

The adsorption column, in which step (v) was previously completed, is evacuated to a pressure below one atmospheric pressure by means of vacuum pump, blower ejector in order to recover product gas, CO. It is preferable that the column is evacuated to a pressure less than 300 Torr (40 kPa), more preferable to 30-100 Torr (4-13.3 kPa).

### Step (vii)

The adsorption column, in which step (vi) was previously completed, is connected to the other adsorption column, in which step (ii) was previously completed, to pressurize the former column by introducing gas from the latter column to the former column. Preferably, introduction of the gas is cocurrently carried out. This step is continued until the pressure in the latter column is reduced to one atmosphere or a pressure close to it. In end of this step, the pressure in the former column is less than one atmosphere. The pressure in the former adsorption column may be increased to near pressure equalization of the two columns.

### Step (viii)

The gas withdrawn in step (v) of the other adsorption column is introduced into the adsorption column, in which step (vii) was previously completed.

According to one aspect of the present invention, adsorption is carried out at nearly atmospheric pressure. The present invention generally relates to a method of separating carbon monoxide in a feed gas containing nitrogen as well as carbon monoxide, using at least two adsorption columns packed with an adsorbent selective for carbon monoxide such as activated carbon, synthetic or natural zeolite or a mixture thereof.

The present invention is explained by typical embodiment, but not limit the scope of this invention.

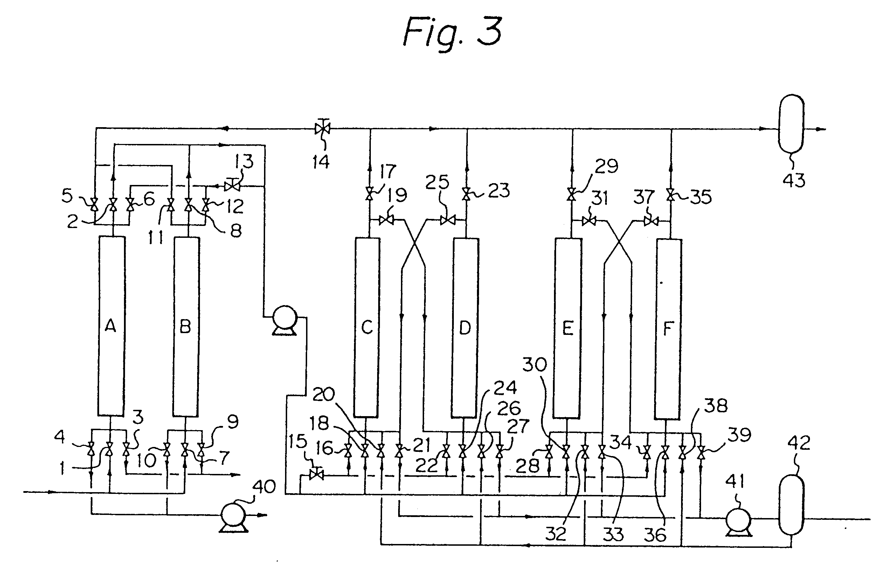

Figure 3 is a flowsheet of the continuous adsorptive process of separating and concentrating carbon monoxide after removing carbon dioxide and nitrogen from converter off-gases. Adsorption columns A and B are packed with an adsorbent selective for carbon dioxide. The two columns are evacuated to 100 Torr (13.3 kPa), preferably to 60 Torr (8 kPa), with a vacuum pump. Then, the feed gas is introduced into column A through a valve 1, with the other valves in the system left closed.

At this time, column B is maintained in at under-pressure, that is, in vacuum. After column A is pressurized, and is maintained at 0.01-3.0 kg/cm² · G (101-400 kPa), preferably 0.2-1.0 kg/cm² · G (120-200 kPa). Valve 2 is opened, and CO₂ and part of CO are adsorbed on or in the adsorbent and the remainder of the feed gas. After a definite amount of the feed gas is passed through column A for a given time, valves 1 and 2 are closed. Then, valve 3 is open, and pressure of column A is decreased to near one atmospheric pressure. Valve 3 is closed and valve 4 is open, so column A is evacuated by vacuum pump, blower or ejector to, preferably 100 Torr (13.3 kPa) and more preferably, 30 Torr (4 kPa) in order to desorb carbon dioxide. Valve 5 is open (at this time, amount of gas for purge is adjusted by hand valve 14), whereby CO₂ remaining on or in the adsorbent is purged by passing through the waste gas of the second adsorption stage. Then the pressure of column A is 270 Torr. Then valves 4 and 5 are closed, and valve 6 is open, so column A is pressurized by introducing the product gas thereto. The flow between or among said columns is switched.

In the second adsorption stage, CO is separated from the first stage product gas. Adsorption columns C, D, E and F contain an adsorbent exhibiting selective adsorbing property to carbon monoxide.

Adsorption columns C, D, E and F are evacuated to 100 Torr (1.33 kPa), preferably 30 Torr (4 kPa) by means of vacuum pump 41. Valve 16 is open. The first stage product gas is introduced into adsorption column C. The rate of increase in pressure of column C is adjusted by valve 15. In the adsorption step, valves 17 and 18 are open and at the same time, valve 16 is closed. Introduction of the first stage product gas is continued. Carbon monoxide is adsorbed on or in the adsorbent and more poorly adsorbable component, i.e. nitrogen is passed through column C. Some of the component passing through column C is used as a gas for purge in the first adsorption stage. The remainder of the component can be used as fuel, because it contains considerable amount of CO. The remainder of the component is stored in tank 43.

Adsorption step is continued by passing definite amount of the first stage product gas through column C for a given time. Valves 17 and 18 are closed and valve 19 is open. Pressure of column C is reduced to one atmospheric pressure and the gas withdrawn from column C is introduced into column D. Then valve 20 is open and part of the second stage product gas is introduced from product tank 42 for purging the gas remaining in the portion between the absorbent particles. The gas withdrawn in the purging step is utilized for pressurizing the other column.

Then valves 19 and 20 are closed and valve 21 is open. So, column C is evacuated by vacuum pump to desorb carbon monoxide from the adsorbent. The pressure of column C is reduced to less than 300 Torr (40 kPa), preferably 300-30 Torr (40-4 kPa). The flow between or among said columns is switched so as to repeat the above steps in the columns. Tank for waste gas is shown at 43.

Carbon monoxide can be separated from a mixture comprising CO, CO₂ and more poorly adsorbable component, N₂ by combining the first adsorption stage and the second adsorption stage. Particularly, the waste gas of the second adsorption stage can be used as a gas for purge of the first adsorption stage. The product gas, CO separated according to the present invention contains CO₂ of less than 0.5% and N₂ of less than 1%.

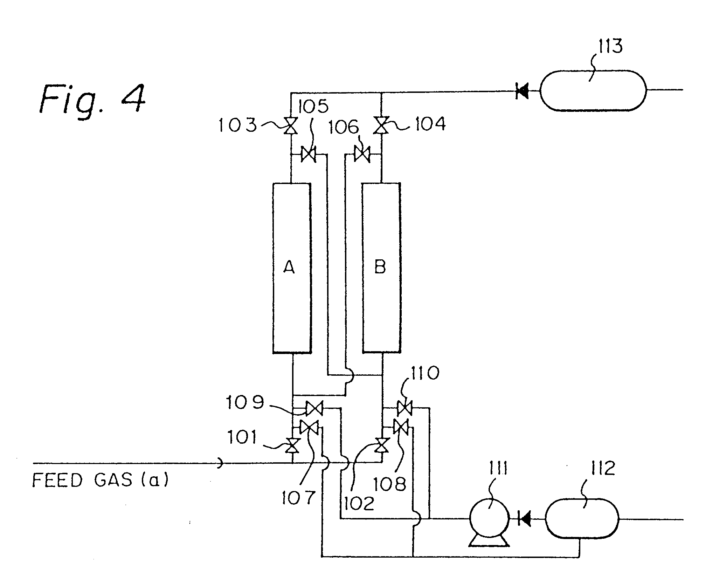

The embodiments shown in Figures 4 and 5 relate to separation of CO from the first stage product gas and another feed gas comprising carbon monoxide and more poorly adsorbable component, such as nitrogen. The embodiment shown in Figure 4 is explained in the following.

Adsorption columns A and B contain adsorbent exhibiting selective adsorbing property to carbon monoxide. Columns A and B are evaporated to 30 Torr, preferably 60 Torr by means of vacuum pump 111. Valve 101 is open and valves 102-110 are closed. Column A is pressurized by introducing feed gas thereinto. Column B is still maintained at a pressure close to vacuum. Valve 103 is open. Introduction of feed gas into column A is continued at a pressure of 0.1-3.0 kg/cm² · G (110-400 kPa), preferably 0.2-1.0 kg/cm² · G (120-200 kPa). Then valve 101 is closed. Valve 103 is open and part of the gas remaining in proportion around exit of column A is discharged to 0.1-0.75 kg/cm² · G (110-175 kPa) outside all of the columns. Then valve 103 is open and valve 105 is closed to connect column A to column B. The gas discharged from column A is introduced to column B until pressure of column is reduced to near one atmospheric pressure. The valve 105 is closed and valve 107 is open, so part of the product gas is passed through column A from tank 112 for product gas to purge poorly adsorbable component, N₂ remaining in column A. CO concentration of gas withdrawn in the purging step is higher than that in feed gas. So, the gas withdrawn in the purging step can be utilized for pressurizing the other column.

Then valve 107 is closed and valve 109 is open, so column A is evacuated by means of vacuum pump to recover product gas, CO from the adsorbent of column A. In general, pressure of column A is reduced to less than 300 Torr (40 kPa), preferably 300-30 Torr (40-4 kPa).

The flow between or among the columns is switched. Tank for waste gas is shown at 113.

This invention is further illustrated by the following examples, but not limit the scope.

### Example 1

In this example, off-gas from converter furnace having the following components was used.

| | |
|---|---|
| CO | 83% |
| CO₂ | 2.7% |
| N₂ | 4.9% |
| H₂ | 9.3% |
| O₂ | 0.1% |

PSA consisting of adsorption, depressurization, evacuation, purge, and pressurization by product, pressurization by feed gas was used in the first adsorption stage. PSA consisting of pressurization by first stage product gas, adsorption, depressurization, purge, evacuation and pressurization by gas withdrawn from the other column was used in the second adsorption stage.

In the first stage, steel columns (12⁸ × 1.7 m) containing Zeoharb (available by Osaka Sanso Kogyo Ltd.) (50 kg 1/8 inch pellet) were used. In the second stage, steel columns (16⁸ × 2.4 m) containing activated Zeoharb (166 kg 1/8 inch pellet) were used. All columns were evacuated to 100 Torr (13 kPa) in the first stage and all columns were evacuated to 60 Torr (8 kPa) in the second stage.

Said off-gas was fed into first stage columns at line speed of 6 cm/sec. 32.8 Cubic meter of said off-gas was used. 19.3 Cubic meter of product gas, carbon monoxide was obtained. Amount of waste gas was 13.5 cubic meter. Yield of CO was 68%.

The product gas had the following components:

| | |
|---|---|
| CO | 98.6% |
| CO₂ | 0.5% |
| N₂ | 0.9% |
| H₂ | 0 |
| O₂ | 0 |

### Example 2

The procedure of Example 1 was repeated except that the following off-gas from convert furnace was used and the following conditions were used.

| Off-gas | |
|---|---|
| CO | 86% |
| CO₂ | 4% |
| N₂ | 4% |
| H₂ | 6% |

| | |
|---|---|
| Operation temperature | 25°C |
| Adsorbent | ZE-501 |
| Line speed of off-gas | 6.5 cm/sec. |
| Adsorption pressure | 1.1 kg/cm² · G (110 kPa) |
| Amount of off-gas fed | 42.9 m³ |
| Amount of CO recovered | 25.7 m³ |
| Yield of CO was 68.6%. | |

The product, CO had the following components:

| | |
|---|---|
| CO | 98.7% |
| CO₂ | 0.5% |
| N₂ | 0.8% |

### Example 3

In this example, only second adsorption stage was conducted. Feed gas had the following components:

| | |
|---|---|
| CO | 85.3% |
| N₂ | 5.7% |
| CO₂ | 0.15% |
| H₂ | 8.55% |

Adsorption cycle was in the following:
1. Pressurization by feed gas-adsorption-adsorption-depressurization (gas discharged from column is not utilized in other column)-depressurization (gas discharged in column is utilized in other column)-purge-evacuation-pressurization.
   1. Pressurization by feed gas
   2. Adsorption
   3. Depressurization (gas discharged from column is not utilized in other column)
   4. Depressurization (gas discharged from column is utilized in other column)
   5. Purge
   6. Evacuation
   7. Pressurization by gas discharged by gas in 4 depressurization.
   8. Pressurization by purge gas
SGP columns containing activated synthetic zeolite (MS-5) (1/8 pellet) were used. All columns were evacuated to 60 Torr (8 kPa). Line speed of feed gas was 2 cm/sec. Amount of feed gas was 26.32 NM³ (cubic meter in normal stage). Amount of CO recovered was 11.63 NM³. Yield was 51.7%. Purity of CO was 99.9% with N₂ of 0.09%.

### Example 4 (Comparative)

The procedure of Example 3 was repeated except that pressurization (7) by gas discharged is depressurization (4) was not used. Amount of feed gas fed was 50.5 NM³ and amount of CO recovered was 10.8 NM³. Yield was 25.09%. Purity of CO was 99.9%.

Time sequence of the best process of this invention is as follows:

**TABLE 1**

| First stage | | |
|---|---|---|
| Cycle time (second) | Column A | Column B |
| 0-15 | adsorption | depressurization |
| 15-60 | " | evacuation |
| 60-100 | " | purge by waste gas of second stage |
| 100-120 | " | pressurization by product gas |

**TABLE 2**

| Second stage | | |
|---|---|---|
| Cycle time (second) | Column A | Column B |
| 0-60 | evacuation | pressurization by first stage product gas (1.0 kg/cm² · G) 200 kPa |
| 60-120 | evacuation (80 Torr (10.6 kPa) | adsorption (1.0 kg/cm² · G) 200 kPa |
| 120-180 | pressurization by gas withdrawn from the other column (380 Torr 50 kPa)) | depressurization (760 Torr 96 kPa) |
| 180-240 | pressurization by purge gas | purge (0 kg/cm² · G) 100 kPa |
| 240-300 | pressurization by first stage product gas (1.0 kg/cm² · G) 200 kPa | evacuation |
| 300-360 | adsorption (1.0 kg/cm² · G) 200 kPa | evacuation (80 Torr 10.6 kPa) |
| 360-420 | depressurization (760 Torr 96 kPa) | pressurization by gas withdrawn from other column (360 Torr 48 kPa) |
| 420-480 | purge (0 kg/cm² · G) 100 kPa | pressurization by purge gas (730 Torr (97 kPa)) |

The following Table 3 shows the step cycle by using four adsorption columns according to this invention.

**TABLE 3**

| adsorption column A | adsorption column B | adsorption column C | adsorption column D |
|---|---|---|---|
| 1 evacuation | pressurization by feed gas | depressurization | pressurization by gas withdrawn from the other column |
| 2 evacuation | adsorption | purge by product gas | pressurization by purge gas |
| 3 pressurization by gas withdrawn from the other column | depressurization | evacuation | pressurization by feed gas |
| 4 pressurization by purge gas | purge by product gas | evacuation | adsorption |
| 5 pressurization by feed gas | evacuation | pressurization by gas withdrawn from the other column | depressurization |
| 6 adsorption | evacuation | pressurization by purge gas | purge by product gas |
| 7 depressurization | pressurization by gas withdrawn from the other column | pressurization by feed gas | evacuation |
| 8 purge by feed gas | pressurization by purge gas | adsorption | evacuation |

### Example 7

The procedure of Example 1 was repeated under the following experimental conditions:

| feed gas | |
|---|---|
| CO | 21% |
| CO₂ | 8% |
| CH₄ | 3% |
| H₂ | 67% |

| | | |
|---|---|---|
| Temperature | | 25°C |
| Line speed of feed gas | | 8.5 cm/sec. |
| Adsorption pressure | | 2.0 kg/cm² · G |
| Degree of evacuation | | 80 Torr (10 kPa) (first stage) |
| | | 30 Torr (4 kPa) (second stage) |
| Amount of feed gas fed | | 103 NM³ |
| Amount of CO recovered | | 12.6 NM³ |
| Product Gas: | CO | 99% |
| | CH₄ | 0.15% |
| | H₂ | 0.05% |
| | CO₂ | 0.02% |
| Yield | | 58% |

## Claims

1. A process for separating carbon monoxide from a feed gas comprising CO₂, CO and N₂ by PSA in a two stage adsorption operation which comprises a first adsorption stage for removing CO₂ from said feed gas and a second adsorption stage for separating CO from gaseous mixture withdrawn as first stage product gas from the first adsorption stage:
(1) the first adsorption stage comprising pressure swing adsorption with repeated adsorption and desorption using at least two adsorption columns containing an adsorbent exhibiting selective adsorption properties for carbon dioxide to remove carbon dioxide from said feed gas, and
(2) the second adsorption stage comprising a process for separating carbon monoxide from the gaseous mixture, which has been withdrawn from the first adsorption stage, through PSA using at least two adsorption columns containing an adsorbent exhibiting selective adsorption properties for carbon monoxide, characterised in that the second adsorption stage comprises:
(i) pressurising an adsorption column by gaseous mixture which has been withdrawn from the first adsorption stage;
(ii) continuing the introduction of the gas mixture referred to in step (i) into the adsorption column pressurised in step (i) so as to adsorb carbon monoxide on or in the adsorbent until the concentration of the CO in the gas leaving the adsorption column becomes equal to the concentration of the CO in the gas entering the adsorption column or until just before the time when the two concentrations became equal;
(iii) connecting the adsorption column in which step (ii) has been completed to another adsorption column in which step (v) was previously completed, to reduce the pressure in the former adsorption column to atmospheric pressure;
(iv) purging N₂ by cocurrently introducing product gas into the first-mentioned adsorption column of step (iii), and in which step (iii) has been completed;
(v) evacuating the adsorption column in which step (iv) has been completed to recover carbon monoxide adsorbed on or in the adsorbent of the adsorption column;
(vi) connecting the adsorption column in which step (v) has been completed to another adsorption column, in which step (ii) was previously completed to increase pressure in said adsorption column referred to in step (v), and
(vii) after step (vi) is completed, pressurising the first of the two columns mentioned in step (vi) by gas withdrawn in the purging step of another column,
periodically switching the flow between or among said adsorption columns so as to repeat the above steps in the columns.

2. The process as defined in Claim 1, wherein said first adsorption stage comprises:
(i) pressurizing an adsorption column by the product gas of the first adsorption stage
(ii) introducing said feed gas into the adsorption column, pressurized in step (i), so as to adsorb carbon dioxide as a main component on or in the adsorbent,
(iii) depressurizing the adsorption column in which step (ii) has been completed to near one atmospheric pressure,
(iv) evacuating the column in which step (iii) has been completed, and
(v) purging carbon dioxide by introducing waste gas obtained in the absorbing step of the second stage, into the column in which step (iv) was previously completed,
periodically switching the flow between or among said columns so as to repeat the above steps in the columns.

3. The process as defined in Claim 1 or Claim 2 wherein after step (ii) of the second stage is completed and before step (iii) of the second stage is started, the second stage further contains a step of depressuring the column, thereby discharging part of the gas remaining in the column outside all the columns.

4. The process according to Claim 1 wherein step (iii) is countercurrently carried out.

5. The process according to Claim 1 wherein the evacuation is countercurrently carried out.

## Patentansprüche

1. Verfahren zur Abtrennung von Kohlenmonoxid aus einem Beschickungsgas, enthaltend CO₂, CO und N₂, in einem Zwei-Stufen-Adsorptionsverfahren durch Druckwechseladsorption mit einer ersten Adsorptionsstufe zur Entfernung von CO₂ aus dem Beschickungsgas und einer zweiten Adsorptionsstufe zur Abtrennung von CO aus dem aus der ersten Adsorptionsstufe als Produktgas der ersten Stufe abgezogenen gasförmigen Gemisch, wobei
(1) die erste Adsorptionsstufe eine Druckwechseladsorption mit wiederholter Adsorption und Desorption unter Verwendung von mindestens zwei Adsorptionssäulen mit einem Adsorptionsmittel mit selektiven Adsorptionseigenschaften gegenüber Kohlendioxid zur Entfernung von Kohlendioxid aus dem Beschickungsgas und
(2) die zweite Adsorptionsstufe ein Verfahren zur Abtrennung von Kohlenmonoxid aus dem aus der ersten Adsorptionsstufe abgezogenen gasförmigen Gemisch durch Druckwechseladsorption unter Verwendung von mindestens zwei Adsorptionssäulen mit einem Adsorptionsmittel mit selektiven Adsorptionseigenschaften gegenüber Kohlenmonoxid umfassen, dadurch gekennzeichnet, daß die zweite Ad sorptionsstufe
(i) ein Unter-Druck-Setzen einer Adsorptionssäule durch das aus der ersten Adsorptionsstufe abgezogene gasförmige Gemisch;
(ii) ein Fortführen des Einführens des in Schritt (i) erwähnten gasförmigen Gemisches in die in Schritt (i) unter Druck gesetzte Adsorptionssäule zur Adsorption von Kohlenmonoxid auf dem oder im Adsorptionsmittel, bis die Konzentration des CO's in dem die Adsorptionssäule verlassenden Gas der Konzentration des CO's in dem in die Adsorptionssäule eintretenden Gas entspricht oder bis zu einem Zeitpunkt direkt bevor sich die beiden Konzentrationen entsprechen;
(iii) ein Verbinden der Adsorptionssäule, in der Schritt (ii) beendet wurde, mit einer weiteren Adsorptionssäule, in der zuvor Schritt (v) beendet wurde, zur Druckerniedrigung in ersterer Adsorptionssäule auf Atmosphärendruck;
(iv) ein N₂-Austreiben durch gleichzeitiges Einleiten von Produktgas in die erstgenannte Adsorptionssäule des Schritts (iii), in der Schritt (iii) beendet wurde;
(v) ein Evakuieren der Adsorptionssäule, in der Schritt (iv) beendet wurde, zur Rückgewinnung des auf oder in dem Adsorptionsmittel der Adsorptionssäule adsorbierten Kohlenmonoxids;
(vi) ein Verbinden der Adsorptionssäule, in der Schritt (v) beendet wurde, mit einer weiteren Adsorptionssäule, in der zuvor Schritt (ii) beendet wurde, zur Erhöhung des Druckes in der in Schritt (v) erwähnten Adsorptionssäule und
(vii) nach Beendigung der Stufe (vi) ein Unter-Druck-Setzen der ersten der in Stufe (vi) genannten beiden Säulen durch im Austreibschritt einer weiteren Säule abgezogenes Gas und
ein periodisches Umschalten des Flusses zwischen oder unter diesen Adsorptionssäulen zur Wiederholung der oben genannten Schritte in den Säulen umfaßt.

2. Verfahren nach Anspruch 1, dadurch gekennzeichnet, daß die erste Adsorptionsstufe
(i) ein Unter-Druck-Setzen einer Adsorptionssäule durch das Produktgas der ersten Adsorptionsstufe,
(ii) ein Einführen des Beschickungsgases in die in Schritt (i) unter Druck gesetzte Adsorptionssäule zur Adsorption von Kohlendioxid als Hauptkomponente auf dem oder im Adsorptionsmittel,
(iii) ein Entspannen des Druckes der Adsorptionssäule, in der Schritt (ii) beendet wurde, bis auf nahe eine Atmosphäre Druck,
(iv) ein Evakuieren der Säule, in der Schritt (iii) beendet wurde, und
(v) ein Kohlendioxid-Austreiben durch Einführen von bei der Adsorptionsstufe der zweiten Stufe angefallenem Abgas in die Säule, in der zuvor Schritt (iv) beendet wurde, und
ein periodisches Umschalten des Flusses zwischen oder unter diesen Säulen zur Wiederholung der oben genannten Schritte in den Säulen umfaßt.

3. Verfahren nach Anspruch 1 oder 2, dadurch gekennzeichnet, daß, nachdem Schritt (ii) der zweiten Stufe beendet ist und bevor mit Schritt (iii) der zweiten Stufe begonnen wird, die zweite Stufe zusätzlich einen Schritt zur Druckentspannung der Säule umfaßt, um dadurch einen Teil des restlichen Gases in der Säule aus dem Säulensystem auszutragen.

4. Verfahren nach Anspruch 1, dadurch gekennzeichnet, daß Schritt (iii) im Gegenstrom ausgeführt wird.

5. Verfahren nach Anspruch 1, dadurch gekennzeichnet, daß das Evakuieren im Gegenstrom ausgeführt wird.

## Revendications

1. Procédé permettant la séparation de monoxyde de carbone à partir d'un gaz d'alimentation comprenant du CO₂, CO et N₂ par une méthode d'adsorption par variation de la pression en deux temps, comprenant une première étape d'adsorption assurant l'élimination de CO₂ dudit gaz d'alimentation et une deuxième étape d'adsorption assurant la séparation de CO à partir du mélange gazeux soutiré comme produit gazeux issu de la première étape d'adsorption :
(1) la première étape d'adsorption comprenant l'adsorption par variation de la pression par adsorption et désorption répétées utilisant au moins deux colonnes d'adsorption contenant au moins un adsorbant capable d'adsorber sélectivement le dioxyde de carbone, de façon à éliminer le dioxyde de carbone dudit gaz d'alimentation, et
(2) la deuxième étape d'adsorption comprenant un procédé destiné à séparer le monoxyde de carbone du mélange gazeux soutiré de la première étape d'adsorption, par une méthode d'adsorption par variation de la pression utilisant au moins deux colonnes d'adsorption contenant un adsorbant capable d'adsorber sélectivement le monoxyde de carbone, caractérisée en ce que la deuxième étape d'adsorption comprend les opérations consistant à :
(i) mettre sous pression une colonne d'adsorption au moyen du mélange gazeux soutiré de la première étape d'adsorption;
(ii) poursuivre l'introduction du mélange gazeux mentionné à l'opération (i) dans la colonne d'adsorption mise sous pression à l'opération (i) de façon à ce que le monoxyde de carbone soit adsorbé sur ou dans l'adsorbant jusqu'à ce que la concentration de CO dans le gaz quittant la colonne d'adsorption soit égale à la concentration de CO dans le gaz entrant dans la colonne d'adsorption ou juste un peu avant que ces deux concentrations ne soient équivalentes;
(iii) connecter la colonne d'adsorption de l'opération (ii) à une autre colonne d'adsorption, laquelle a préalablement servi à la mise en oeuvre de l'opération (v), de façon à réduire la pression dans la première colonne d'adsorption à la pression atmosphérique;
(iv) purger l'azote en introduisant à co-courant le produit gazeux dans la colonne d'adsorption mentionnée tout d'abord à l'opération (iii) laquelle a servi à la mise en oeuvre de l'opération (iii);
(v) vider la colonne d'adsorption qui a servi à la mise en oeuvre de l'opération (iv) de façon à récupérer le monoxyde de carbone adsorbé sur ou dans l'adsorbant de ladite colonne d'adsorption;
(vi) connecter la colonne d'adsorption qui a servi à la mise en oeuvre de l'opération (v) à une autre colonne d'adsorption, laquelle a précédemment servi à la mise en oeuvre de l'opération (ii) de façon à augmenter la pression dans ladite colonne d'adsorption mentionnée à l'opération (v), et (vii) une fois l'opération (vi) terminée, mettre sous pression la première des deux colonnes mentionnées à l'opération (vi) à l'aide du gaz soutiré lors de la purge d'une autre colonne,
en permutant périodiquement la circulation dans les colonnes, de façon à répéter les différentes opérations mentionnées ci-dessus.

2. Le procédé selon la revendication 1, dans lequel ladite première étape d'adsorption comprend les opérations consistant à :
(i) mettre sous pression une colonne d'adsorption au moyen du gaz issu de la première étape d'adsorption,
(ii) introduire ledit gaz d'alimentation dans la colonne d'adsorption mise sous pression à l'opération (i) de façon à ce que le dioxyde de carbone soit adsorbé en tant que constituant principal sur ou dans l'adsorbant,
(iii) mettre sous pression la colonne d'adsorption qui a servi à la mise en oeuvre de l'opération (ii) à environ une pression atmosphérique,
(iv) vider la colonne qui a servi à la mise en oeuvre de l'opération (iii), et
(v) purger le dioxyde de carbone par introduction du gaz résiduaire obtenu lors de l'étape d'absorption de la deuxième étape dans la colonne qui a servi à la mise en oeuvre de l'opération (iv),
en permutant périodiquement la circulation dans les colonnes, de façon à répéter les différentes opérations mentionnées ci-dessus.

3. Le procédé selon la revendication 1 ou la revendication 2, dans lequel une fois l'opération (ii) de la deuxième étape achevée et avant le début de l'opération (iii) de la deuxième étape, la deuxième étape comprend en outre une opération de dépressurisation de la colonne de façon à évacuer une partie du gaz restant dans la colonne, à l'écart de toutes les colonnes.

4. Procédé selon la revendication 1, dans lequel l'étape (iii) est réalisée à contre-courant.

5. Procédé selon la revendication 1, dans lequel l'évacuation est réalisée à contre-courant.
